# EUROPEAN PATENT SPECIFICATION

(11) **EP 2 829 957 B1**
(45) Date of publication and mention of the grant of the patent: **26.12.2018**
(21) Application number: 14178517.0
(22) Date of filing: 25.07.2014
(51) Int. Cl.: G06F 3/041, G06F 1/16, H04M 1/02, G02F 1/1333, G02B 27/28, G09F 9/30, G06F 3/044, G02F 1/1335

(54) **Flexible touch screen panel and flexible display device with the same**
Flexible Berührungsbildschirmtafel und flexible Anzeigevorrichtung damit
Panneau d'écran tactile souple et dispositif d'affichage flexible doté de celui-ci

(30) Priority: 25.07.2013 KR 20130087829
(43) Date of publication of application: 28.01.2015
(73) Proprietor: Samsung Display Co., Ltd., Gyeonggi-do (KR)
(72) Inventor: Kang, Sung-Ku, Yongin-si, Gyeonggi-do (KR); Jung, Tae-Hyeog, Yongin-si, Gyeonggi-do (KR); Lee, Kyu-Taek, Yongin-si, Gyeonggi-do (KR); Lee, Choon-Hyop, Yongin-si, Gyeonggi-do (KR); Lee, Jeong-Heon, Yongin-si, Gyeonggi-do (KR); Min, Gui-Nam, Yongin-si, Gyeonggi-do (KR)
(74) Representative: Gulde & Partner

(56) References cited:
- WO-A2-2012/091304
- US-A- 4 592 623
- US-A1- 2007 128 382
- US-A1- 2009 040 443
- US-A1- 2012 275 024
- US-A1- 2012 306 777

## Description

### BACKGROUND

### 1. Field

An aspect of the present invention relates to a flexible touch screen panel and a flexible display device with the same.

### 2. Description of the Related Art

A touch screen panel is an input device that allows a user's instruction to be input by selecting an instruction content displayed on a screen of a display device or the like with a user's hand or an object.

To this end, the touch screen panel is formed on a front face of the display device to convert a contact position into an electrical signal. Here, the user's hand or an object is directly in contact with the touch screen panel at the contact position. Accordingly, the instruction content selected at the contact position is input as an input signal to the image display device.

Since such a touch screen panel can be substituted for a separate input device connected to a display device, such as a keyboard or mouse, its application fields have been gradually extended.

Touch screen panels are divided into a resistive overlay touch screen panel, a photosensitive touch screen panel, a capacitive touch screen panel, and the like. Among these touch screen panels, the capacitive touch screen panel converts a contact position into an electrical signal by sensing a change in capacitance formed between a conductive sensing pattern and an adjacent sensing pattern or ground electrode when a user's hand or object comes in contact with the touch screen panel.

Generally, such a touch screen panel is frequently commercialized by being attached to an outer face of a display device such as a liquid crystal display device or organic light emitting display device. Therefore, the touch screen panel requires characteristics of high transparency and thin thickness.

A flexible display device has recently been developed according to US 2012/0306777 A1, and in this case, a touch screen panel attached on the flexible display device also requires flexibility. Further, US 2007/0128382 A1 discloses a polarizing plate that is made by laminating a compensation film having a coated agent performing a compensation function on the surface of a rolled linear polarizing plate. US 2012/0275024 A1 discloses a rollable film assembly which includes a polarizer having a first side and a second side, wherein a first layer of adhesive is bonded to the first side and a second layer of adhesive is bonded to the second side. US 2009/0040443 A1 discloses a method of producing a liquid crystal panel whit a layered structure. US 4 592 623 A1 discloses a polarizing plate comprising a polarizing film and a protective layer bonded through an adhesive layer to at least one surface of the polarizing film. WO 2012/091304 A2 discloses an optical film with a compensation layer.

### SUMMARY

Embodiments provide a flexible touch screen panel in which a polarizing functional layer and sensing patterns as touch sensors are integrally formed on one surface of a window substrate having flexibility, so that it is possible to ensure the flexibility of the touch screen panel, to decrease the thickness of the touch screen panel, and to improve the visibility of an image.

Embodiments also provide a flexible display device with the flexible touch screen panel and a method for forming a flexible touch screen.

According to an aspect of the present invention, there is provided a flexible touch screen panel according to claim 1.

The polarizer may be attached on the first surface of the window substrate through a first transparent adhesive layer, and the retardation compensation film may be attached on a first surface of the polarizer through a second transparent adhesive layer.

The first and/or the second transparent adhesive layer may be implemented with a solvent-type adhesive or a film-type adhesive. The solvent-type adhesive may be implemented using at least one of an aqueous poly vinyl alcohol (PVA) adhesive, a polyester-based adhesive and a polyurethane-based adhesive. The film-type adhesive may be implemented using one of a polyacryl-based adhesive and a polysilicon-based adhesive.

The window substrate may be formed of at least one of polymethyl methacrylate (PMMA), acryl and polyester (PET).

The polarizer may be implemented by stretching a polymer film, and has an absorption axis in the stretched direction. The absorption axis of the polarizer may be implemented so that the angle between the absorption axis of the polarizer and a bending axis of the touch screen panel ranges from about 45 to about 90 degrees wherein 360 degree correspond to a full circle.

The sensing patterns may include first sensing patterns configured to be connected along a first direction; first connecting lines configured to connect the adjacent first sensing cells to each other; second sensing patterns configured to be connected along a second direction; and second connecting lines configured to connect the adjacent second sensing cells to each other. An insulating layer may be interposed at intersection portions of the first connecting lines and the second connecting lines.

According to another aspect of the present invention, there is provided a flexible display device according to claim 13.

According to yet another aspect of the present invention there is provided a method according to claim 15. The invention is set out in the appended set of claims. The embodiments and/ or clauses and/or examples of the following description which are not covered by the appended claims are considered as not being part of the present invention.

### BRIEF DESCRIPTION OF THE DRAWINGS

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey the scope of the example embodiments to those skilled in the art.

In the drawing figures, dimensions may be exaggerated for clarity of illustration. It will be understood that when an element is referred to as being "between" two elements, it can be the only element between the two elements, or one or more intervening elements may also be present. Like reference numerals refer to like elements throughout.
FIG. 1 is a plan view schematically showing a touch screen panel according to an embodiment of the present invention.
FIG. 2 is a main portion enlarged view showing an example of a sensing pattern shown in FIG. 1.
FIG. 3 is a sectional view showing one area (I-I') of a flexible display device with the touch screen panel according to the embodiment of the present invention.
FIG. 4 is a graph showing an optimum angle between an absorption axis of a polarizer and a bending axis of the touch screen panel according to the embodiment of the present invention.

### DETAILED DESCRIPTION

In the following detailed description, only certain exemplary embodiments of the present invention have been shown and described, simply by way of illustration. As those skilled in the art would realize, the described embodiments may be modified in various different ways, all without departing from the scope of the present invention as set forth in the claims. Accordingly, the drawings and description are to be regarded as illustrative in nature and not restrictive. In addition, when an element is referred to as being "on" another element, it can be directly on the another element or be indirectly on the another element with one or more intervening elements interposed therebetween. Also, when an element is referred to as being "connected to" another element, it can be directly connected to the another element or be indirectly connected to the another element with one or more intervening elements interposed therebetween. Hereinafter, like reference numerals refer to like elements.

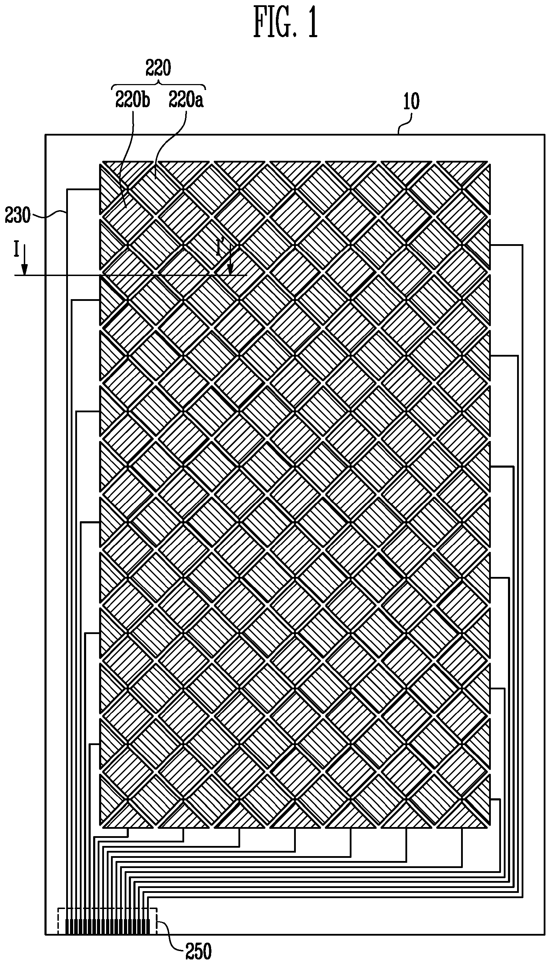

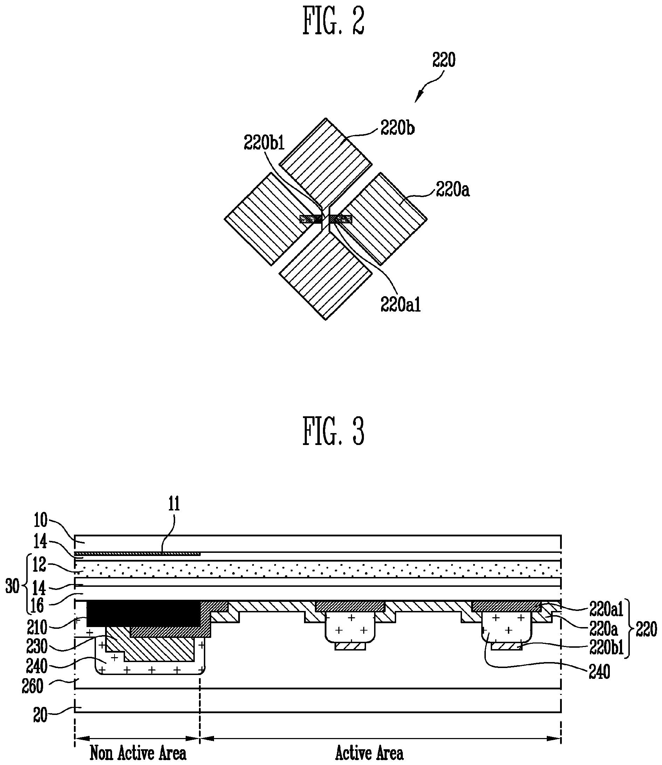

FIG. 1 is a plan view schematically showing a touch screen panel according to an embodiment of the present invention. FIG. 2 is a main portion enlarged view showing an example of a sensing pattern shown in FIG. 1.

FIG. 3 is a sectional view showing one area (I-I') of the touch screen panel according to the embodiment of the present invention.

Referring to FIGS. 1 to 3, the touch screen panel according to this embodiment includes a window substrate 10 having flexibility, sensing patterns 220 formed on one surface of a retardation compensation film 16 which is sequentially attached together with a polarizer 12 on a first surface as an inner surface of the window substrate 10, and sensing lines 230 configured to connect the sensing patterns 220 to an external driving circuit (not shown) through a pad portion 250.

The window substrate 10 according to this embodiment is not made of a rigid material such as glass but preferably made of a transparent material having flexibility, e.g., polymethyl methacrylate PMMA, acryl, polyester PET, polyimide PI or the like.

In this embodiment, the window substrate 10 performs not only a function as a transparent substrate simply positioned on the outermost face of a display device but also a function of protecting and supporting the polarizer 12.

That is, a polarizing functional layer 30 according to this embodiment is implemented by removing a support layer made of triacetyl cellulose TAC, which is included in the existing polarizing plate. The polarizer 12 and the retardation compensation film 16 are attached directly on the first surface of the window substrate 10, so that the polarizing functional layer 30 has flexibility, i.e., high bendability.

In this case, the polarizer 12 is attached on the first surface of the window substrate 10 through a first transparent adhesive layer 14, and the retardation compensation film 16 is also attached on the first surface of the polarizer 12 through a second transparent adhesive layer 14. Thus, the polarizer 12 and the retardation compensation film 16, implemented into a laminated structure as described above are operated as the polarizing functional layer 30.

The existing polarizing plate is generally implemented into a structure in which a polarizer is interposed between upper and lower support layers, and a retardation compensation film is attached on one surface of the lower support layer.

The polarizer performs a function of controlling the amount of light transmitted according to the degree of polarization of light incident thereonto. The polarizer may include poly vinyl alcohol PVA. For example, the polarizer implements polarization by stretching the PVA film, which absorbs iodine, with strong tension.

The support layers respectively provide on and beneath the polarizer may be implemented as a film made of TAC in order to protect and support the PVA film. The polarizing plate is generally attached to the outside of a display device in order to improve external visibility such as the prevention of external light reflection. In a case where a touch screen panel is attached on the display device, the polarizing plate may be attached to an outer face of the touch screen panel.

However, the polarizing plate and the touch screen panel pass through a process of individually manufacturing the polarizing plate and the touch screen panel and then attaching or assembling them to each other. In this case, there occur disadvantages such as a decrease in process efficiency and a decrease in yield. Particularly, in the polarizing plate with the laminated structure, the polarizer has a thickness of about 20*µ*m, and each of the upper and lower support layers has a thickness of about 40*µ*m. Hence, the polarizing plate is implemented to have a thickness of about 100*µ*m. In a case where the polarizing plate is attached to the touch screen panel as it is, the entire thickness of the touch screen panel is increased, which goes against the tendency to decrease the thickness of the touch screen panel.

The TAC that is a material of the support layer has a relatively rigid property as compared with the PVA. Therefore, if the polarizing plate provided with the support layer is attached to a flexible touch screen panel, it is impossible to ensure the bendability of the flexible touch screen panel.

Accordingly, in this embodiment, in order to overcome such disadvantages, the support layer provided in the existing polarizing plate, and one surface of the polarizer 12 is attached directly to the window substrate 10 having flexibility as a support body through the first transparent adhesive layer 14 as shown in FIG. 3. Then, the retardation compensation film 16 is attached to the other surface of the polarizer 12 through the second transparent adhesive layer 14.

According to this embodiment, in the polarizing functional layer 30, the support layer made of TAC is removed, as compared with the existing polarizing plate. Thus, the thickness of the polarizing functional layer 30 can be decreased by about 80*µ*m, as compared with that of the existing polarizing plate, thereby obtaining flexibility, i.e., high bendability.

That is, the touch screen panel according to this embodiment has a structure in which, as shown in FIG. 3, the polarizer 12 and the retardation compensation film 16 are attached directly on the first surface of the window substrate 10 having flexibility through the transparent adhesive layers 14, and the sensing patterns 220 and the sensing lines 230 are formed directly on an inner surface of the retardation compensation film 16. Accordingly, it is possible to implement the touch screen panel having flexibility integrated with the window substrate and the polarizing plate.

In this case, the attachment between the polarizer 12 and the retardation compensation film 16 through the transparent adhesive layer 14 may be implemented using a roll-to-roll lamination or sheet lamination method.

The transparent adhesive layer 14 may be implemented with a solvent-type adhesive or film-type adhesive. The solvent-type adhesive may include an aqueous PVA adhesive, a polyester-based adhesive and a polyurethane-based adhesive. The film-type adhesive may include a polyacryl-based adhesive and a polysilicon-based adhesive.

Hereinafter, the configuration of the touch screen panel according to this embodiment will be described with reference to FIGS. 1 and 2.

First, the sensing pattern 220, as shown in FIG. 2, includes first sensing cells 220a configured to be connected for each row line along a row direction, a first connecting line 220a1 configured to connect the first sensing cells 220a along the row direction, second sensing cells 220b configured to be connected for each column line along a column direction, and a second connecting line 220b1 configured to connect the second sensing cells 220b along the column direction. For convenience, only one sensing pattern has been illustrated in FIG. 2, but the touch screen panel has a structure in which the sensing pattern shown in FIG. 2 is repetitively disposed.

The first sensing cells 220a and the second sensing cells 220b are alternately arranged not to overlap with each other, and the first and second connecting lines 220al and 220b1 intersect each other. In this case, an insulating layer (not shown) for ensuring stability is interposed between the first and second connecting lines 220al and 220b1.

Meanwhile, the first sensing cells 220a may be integrally formed with the first connecting line 220a1 using a transparent conductive material such as indium tin oxide (hereinafter, referred to as ITO), or may be formed separately from the first connecting line 220a1, so as to be electrically connected by the first connecting line 220al. The second sensing cells 220b may be integrally formed with the second connecting line 220b1 using a transparent conductive material such as ITO, or may be formed separately from the second connecting line 220b1, so as to be electrically connected by the second connecting line 220b1.

For example, the second sensing cells 220b are integrally formed with the second connecting line 220b1 by being patterned in the column direction. The first sensing cells 220a are patterned to respectively have independent patterns between the second sensing cells 220b, and may be connected along the row direction by the first connecting line 220a1 positioned above or below of the first sensing cells 220a.

In this case, the first connecting line 220a1 may be electrically connected to the first sensing cells 220a by coming in direct contact with the first sensing cells 220a above or below the first sensing cells 220a. Alternatively, the first connecting line 220a1 may be electrically connected to the first sensing cells 220a through a contact hole, etc.

The first connecting line 220a1 may be formed using a transparent conductive material such as ITO or using an opaque low-resistance metal material. In this case, the width of the first connecting line 220a1 may be adjusted so that the visualization of the sensing pattern is prevented.

The sensing lines 230 shown in FIG. 1 are respectively connected electrically to row lines of the first sensing cells 220a and column lines of the second sensing cells 220b, so as to connect the row and column lines of the first and second sensing cells 220a and 220b to the external driving circuit (not shown) such as a position detecting circuit through the pad portion 250.

The sensing lines 230 are arranged on a non-active area positioned at the outside of an active area on which an image is displayed. Since the material of the sensing lines 230 is selected in a wide range, the sensing lines 230 may be formed of not only a transparent electrode material used to form the sensing patterns 220 but also a low-resistance metallic material such as molybdenum (Mo), silver (Ag), titanium (Ti), copper (Cu), aluminum (Al) or Mo/Al/Mo.

The touch screen panel according to this embodiment configured as described above is a capacitive touch screen panel. If a contact object such as a user's finger or stylus pen comes in contact with the touch screen panel, a change in capacitance, caused by a contact position, is transferred from the sensing pattern 220 to the driving circuit (not shown) via the sensing line 230 and the pad portion 250. Then, the change in capacitance is converted into an electrical signal by X and Y input processing circuits (not shown), thereby detecting the contact position.

FIG. 3 is a sectional view showing portions of the non-active area and the active area of the touch screen panel formed on the first surface of the window substrate 10 having flexibility, which shows a flexible display device having the touch screen panel.

In this case, the transparent adhesive layer 14, the polarizer 12, the transparent adhesive layer 14 and the retardation compensation film 16 are sequentially formed on the first surface of the window substrate 10. The sensing patterns 220 and the like of the touch screen panel are formed on the inner surface of the retardation compensation film 16.

In FIG. 3, there is shown a structure in which a display device 20 is attached to a bottom surface of the touch screen panel, i.e., in the direction of the first surface of the window substrate 10, through a transparent adhesive layer 260. In this case, the display device 20 is a display device having flexibility, and may be implemented as an organic light emitting display device.

For example, the organic light emitting display device as a self-luminescent device does not require a backlight unit, unlike the existing liquid crystal display device. Hence, a substrate of the organic light emitting display device is made of polymethyl methacrylate PMMA, acryl, polyester PET, etc., which has flexibility. Thus, the organic light emitting display device can have flexibility. Here, the transparent adhesive layer 260 is made of a transparent adhesive material with high light transmittance, such as super view resin SVR or optical cleared adhesive OCA.

Referring to FIG. 3, the sensing patterns 220 formed on the active area of the window substrate 10 include first sensing cells 220a configured to be connected for each row line along a row direction, first connecting lines 220a1 configured to connect the first sensing cells 220a along the row direction, second sensing cells 220b configured to be connected for each column line along a column, and second connecting lines 220b1 configured to connect the second sensing cells 220b along the column direction. An insulating layer 240 is interposed at intersection portions of the first connecting lines 220a1 and the second connecting lines 220b1.

Although the thicknesses of components such as the sensing patterns 220, which constitute the touch screen panel, are exaggerated in FIG. 3, this is provided for convenience of illustration. Practically, the thickness of each component is much smaller than that shown in FIG. 3.

As shown in FIG. 3, a black matrix 210 and sensing lines 230 formed to overlap with the black matrix 210 and electrically connected to the sensing patterns 220 are formed on the non-active area positioned at the outside of the active area.

In this case, the black matrix 210 performs a function of forming a frame of the display area while preventing the visualization of patterns such as the sensing lines formed on the non-active area.

According to the structure described above, the touch screen panel according to this embodiment is positioned between the display device 20 and the window substrate 10, so that it is possible to prevent the visualization of the sensing patterns and to minimize reflexibility while maintaining flexibility.

As shown in FIG. 3, a decoration layer 11 may be formed in an area overlapped with the black matrix 210 on the first surface of the window substrate 10.

In the touch screen panel according to this embodiment configured as described above, the polarizer, the retardation compensation film, the sensing pattern and the like are formed for each cell on the first surface of the window substrate as a mother substrate, and the window substrate is then cut for each cell, thereby manufacturing the touch screen panel integrated with the window substrate and the polarizing plate. Accordingly, it is possible to minimize manufacturing cost and time.

As described above, the touch screen panel according to this embodiment has flexibility. This means that the display device including the touch screen panel can be bent with a predetermined angle.

However, the mechanical bending of the touch screen panel has directivity due to the property of the polarizer attached on the first surface of the window substrate. Accordingly, in this embodiment, the image quality of the flexible display device can be optimized by deriving an optimum angle between an absorption axis of the polarizer and a bending axis of the touch screen panel.

More specifically, the polarizer formed by stretching a polymer film such as PVA-based resin has directivity in which molecules are strongly arranged in the stretched direction (the absorption axis of the polarizer).

That is, in the polarizer, light is absorbed by iodine oriented in the stretched direction or dichroic dyes, thereby performing a polarizing function. In this case, polymers are oriented in the stretched direction, and hence the bonding force between the polymers is decreased in a direction vertical to the stretched direction. Therefore, the polarizer is easily split in the vertical direction. Accordingly, in the design of a flexible display module (including a flexible touch screen panel) in which bending is continuously generated in a specific direction, the directional arrangement of components is required so that the flexible display module can well endure a fatigue load. In the polarizer monoaxially stretched as described above, the bonding between molecules in the vertical direction is weaker than that in the stretched direction (the absorption axis of the polarizer). Thus, the flexible display module is designed so that the angle between the absorption axis of the polarizer and the bending axis of the touch screen panel ranges from about 45 to about 90 degrees, thereby ensuring the mechanical bendability of the polarizer wherein 360 degree correspond to a full circle.

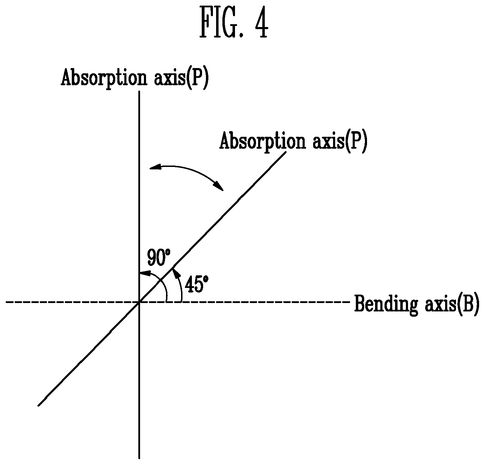

FIG. 4 is a graph showing an optimum angle between the absorption axis of the polarizer and the bending axis of the touch screen panel according to the embodiment of the present invention.

When assuming that the bending axis B of the touch screen panel is 0 degree, the absorption axis P of the polarizer according to this embodiment is designed to become 45 to 90 degrees with respect to the bending axis B of the touch screen panel.

For example, when assuming that the absorption axis of the polarizer is 90 degrees, the polarizer has directivity in which molecules are strongly arranged in the direction of 90 degrees. The direction of 90 degrees is equal to the bending direction of the touch screen panel with respect to the bending axis B.

Thus, if the angle between the absorption axis P of the polarizer and the bending axis B of the touch screen panel is 90 degrees, it is possible to minimize the occurrence of cracks in the polarizer.

On the other hand, when assuming that the absorption axis P of the polarizer is 0 degree, like the bending axis B, the absorption axis P becomes vertical to the bending direction of the touch screen panel with respect to the bending axis B. In this case, the bonding between molecules is weak in the vertical direction of the absorption axis, and therefore, cracks easily occur in the polarizer.

In a case where the absorption axis P of the polarizer is less than 45 degrees with respect to the bending axis B, cracks occur in the polarizer due to the weakness of bonding between molecules. Accordingly, the touch screen panel is designed so that the angle between the absorption axis of the polarizer and the bending axis of the touch screen panel ranges from 45 to 90 degrees, thereby ensuring the mechanical bendability of the polarizer.

By way of summation and review, a capacitive touch screen panel requires a thin film forming process, a pattern forming process and the like in order to form sensing patterns implemented as touch sensors, etc. Therefore, characteristics such as high thermal resistance and chemical resistance are required.

Accordingly, in the capacitive touch screen panel, sensing patterns and the like were conventionally formed on a glass substrate suitable for the process characteristics. In this case, the glass substrate necessarily has a thickness of a certain value or more so as to be conveyed in processes. Therefore, the glass substrate does not satisfy characteristics requiring a thin thickness, and cannot implement flexibility.

In a display device, a polarizing plate is attached to an outer face thereof in order to improve external visibility such as the prevention of external light reflection, and a window substrate is attached to the outermost surface of the display device so as to improve the strength of the display device.

In this case, the polarizing plate, the window substrate and the touch screen panel necessarily pass through a process of individually manufacturing the polarizing plate, the window substrate and the touch screen panel and then attaching or assembling them to one another. In this case, there occur problems such as an increase in the entire thickness of the touch screen panel, a decrease in process efficiency and a decrease in yield.

According to the present invention, the polarizer formed by removing the support layer made of TAC, which is included in the existing polarizing plate, is attached directly on one surface of the window substrate having flexibility, the retardation compensation film is attached on the other surface of the polarizer, and the sensing patterns as touch sensors are formed on one surface of the retardation compensation film, so that it is possible to decrease the thickness of the touch screen panel and to improve the visibility of an image while ensuring flexibility.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A flexible touch screen panel, comprising:
a window substrate (10) configured to have flexibility;
a polarizing functional layer (30) attached on a first surface of the flexible window substrate (10);
sensing patterns (220) ; and
sensing lines (230) being connected to the sensing patterns (220),
**characterized in that**
the polarizing functional layer (30) is flexible and is divided into an active area on which an image is displayed and a non-active area positioned at the outside of the active area,
the sensing patterns (220) are formed in the active area on a first surface of the polarizing functional layer (30) opposite to the surface of the polarizing functional layer (30) which is attached to the window substrate (10);
the sensing lines (230) are formed in the non-active area on the first surface of the polarizing functional layer (30), and the polarizing functional layer (30) has a laminated structure of a polarizer (12) and a retardation compensation film (16), wherein one surface of the polarizer (12) is attached directly on the first surface of the window substrate (10), one surface of the retardation compensation film (16) is attached on the other surface of the polarizer (12) which is not attached to the first surface of the window substrate (10), and the sensing patterns (220) are formed on the other surface of the retardation compensation film which is not attached to the polarizer (12).

2. The flexible touch screen panel of claim 1, wherein the polarizer (12) is attached on the first surface of the window substrate (10) through a first transparent adhesive layer (14), and the retardation compensation film (16) is attached on a first surface of the polarizer (12) through a second transparent adhesive layer (14).

3. The flexible touch screen panel of claim 1, wherein one surface of the polarizer (12) is attached on the first surface of the window substrate (10) through a first transparent adhesive layer (14), and the retardation compensation film (16) is attached on the other surface of the polarizer (12) through a second transparent adhesive layer (14).

4. The flexible touch screen panel of claim 2 or 3, wherein the first and/or the second transparent adhesive layer (14) is implemented with a solvent-type adhesive or a film-type adhesive.

5. The flexible touch screen panel of claim 4, wherein the solvent-type adhesive is implemented using at least one of an aqueous poly vinyl alcohol adhesive, a polyester-based adhesive and a polyurethane-based adhesive.

6. The flexible touch screen panel of claim 4, wherein the film-type adhesive is implemented using one of a polyacryl-based adhesive and a polysilicon-based adhesive.

7. The flexible touch screen panel of one of the preceding claims, wherein the window substrate (10) is formed of at least one of polymethyl methacrylate, acryl and polyester.

8. The flexible touch screen panel of one of the preceding claims, wherein the polarizer (12) is implemented by stretching a polymer film, and has an absorption axis in the stretched direction.

9. The flexible touch screen panel of claim 8, wherein the absorption axis of the polarizer (12) is implemented so that the angle between the absorption axis of the polarizer (12) and a bending axis of the touch screen panel ranges from about 45 to about 90 degrees.

10. The flexible touch screen panel of claim 8 or 9, wherein the polymer film is made of a PVA-based resin material.

11. The flexible touch screen panel of one of the preceding claims, wherein the sensing patterns (220) include:
first sensing patterns (220a) configured to be connected along a first direction;
first connecting lines (220a1) configured to connect the adjacent first sensing cells (220a) to each other;
second sensing patterns (220b) configured to be connected along a second direction; and
second connecting lines (220b1) configured to connect the adjacent second sensing cells (220b) to each other.

12. The flexible touch screen panel of claim 11, wherein an insulating layer is interposed at intersection portions of the first connecting lines (220a1) and the second connecting lines (220b1).

13. A flexible display device (20) comprising a flexible touch screen panel according to one of the preceding claims,
wherein the sensing patterns (220) and the sensing lines (230) are positioned between the flexible display device (20) and the first surface of the window substrate (10).

14. The flexible display device of claim 13, wherein the flexible display device is implemented as an organic light emitting display device.

15. A method for forming a flexible touch screen panel comprising a window substrate (10) configured to have flexibility; a polarizing functional layer (30) attached on a first surface of the window substrate (10); sensing patterns (220); sensing lines (230) being connected to the sensing patterns (220), wherein the polarizing functional layer (30) is flexible and is divided into an active area on which an image is displayed and a non-active area positioned at the outside of the active area, the sensing patterns (220) are formed in the active area on a first surface of the polarizing functional layer (30) opposite to the surface of the polarizing functional layer (30) which is attached to the window substrate (10); the sensing lines (230) are formed in the non-active area on the first surface of the polarizing functional layer (30), and the polarizing functional layer (30) has a laminated structure of a polarizer (12) and a retardation compensation film (16), wherein one surface of the polarizer (12) is attached directly on the first surface of the window substrate (10), one surface of the retardation compensation film (16) is attached on the other surface of the polarizer (12) which is not attached to the first surface of the window substrate (10), and the sensing patterns (220) are formed on the other surface of the retardation compensation film which is not attached to the polarizer (12), the method comprising the step of:
forming the polarizing functional layer (30) by laminating the polarizer (12) and the retardation compensation film (16) using a roll-to-roll lamination or a sheet lamination method.

## Patentansprüche

1. Eine flexible Berührungsbildschirmtafel, aufweisend:
ein Fenstersubstrat (10), das konfiguriert ist, um Flexibilität aufzuweisen;
eine funktionelle Polarisationsschicht (30), die auf einer ersten Oberfläche des flexiblen Fenstersubstrats (10) befestigt ist;
Erfassungsmuster (220); und
Erfassungsleitungen (230), die mit den Erfassungsmustem (220) verbunden sind,
**dadurch gekennzeichnet, dass**
die funktionelle Polarisationsschicht (30) flexibel ist und in einen aktiven Bereich, auf dem ein Bild angezeigt wird, und einen nicht-aktiven Bereich, der auf der Außenseite des aktiven Bereichs positioniert ist, unterteilt ist,
die Erfassungsmuster (220) im aktiven Bereich auf einer ersten Oberfläche der funktionellen Polarisationsschicht (30) gegenüber der Oberfläche der funktionellen Polarisationsschicht (30), die am Fenstersubstrat (10) befestigt ist, ausgebildet sind;
die Erfassungsleitungen (230) im nicht-aktiven Bereich auf der ersten Oberfläche der funktionellen Polarisationsschicht (30) ausgebildet sind, und die funktionelle Polarisationsschicht (30) eine laminierte Struktur aus einem Polarisator (12) und einem Verzögerungskompensationsfilm (16) aufweist, wobei eine Oberfläche des Polarisators (12) unmittelbar auf der ersten Oberfläche des Fenstersubstrats (10) befestigt ist, eine Oberfläche des Verzögerungskompensationsfilms (16) auf der anderen Oberfläche des Polarisators (12), die nicht an der ersten Oberfläche des Fenstersubstrats (10) befestigt ist, befestigt ist, und die Erfassungsmuster (220) auf der anderen Oberfläche des Verzögerungskompensationsfilms, die nicht am Polarisator (12) befestigt ist, befestigt sind.

2. Die flexible Berührungsbildschirmtafel nach Anspruch 1, wobei der Polarisator (12) durch eine erste transparente Haftschicht (14) auf der ersten Oberfläche des Fenstersubstrats (10) befestigt ist, und der Verzögerungskompensationsfilm (16) durch eine zweite transparente Haftschicht (14) auf einer ersten Oberfläche des Polarisators (12) befestigt ist.

3. Die flexible Berührungsbildschirmtafel nach Anspruch 1, wobei eine Oberfläche des Polarisators (12) durch eine erste transparente Haftschicht (14) auf der ersten Oberfläche des Fenstersubstrats (10) befestigt ist und der Verzögerungskompensationsfilm (16) durch eine zweite transparente Haftschicht (14) auf der anderen Oberfläche des Polarisators (12) befestigt ist.

4. Die flexible Berührungsbildschirmtafel nach Anspruch 2 oder 3, wobei die erste und/oder die zweite transparente Haftschicht (14) mit einem Haftstoff vom Lösungsmitteltyp oder einem Haftstoff vom Filmtyp realisiert sind/ist.

5. Die flexible Berührungsbildschirmtafel nach Anspruch 4, wobei der Haftstoff vom Lösungsmitteltyp unter Verwendung von zumindest einem eines wässrigen Polyvinylalkohol-Haftstoffs, eines Haftstoffs auf Polyesterbasis und eines Haftstoffs auf Polyurethanbasis realisiert ist.

6. Die flexible Berührungsbildschirmtafel nach Anspruch 4, wobei der Haftstoff vom Filmtyp unter Verwendung eines Haftstoffs auf Polyacrylbasis und eines Haftstoffs auf Polysiliziumbasis realisiert ist.

7. Die flexible Berührungsbildschirmtafel nach einem der vorhergehenden Ansprüche, wobei das Fenstersubstrat (10) aus zumindest einem eines Polymethylmethacrylats, Acryls und Polyesters ausgebildet ist.

8. Die flexible Berührungsbildschirmtafel nach einem der vorhergehenden Ansprüche, wobei der Polarisator (12) durch Strecken eines Polymerfilms realisiert ist und eine Absorptionsachse in der Streckrichtung aufweist.

9. Die flexible Berührungsbildschirmtafel nach Anspruch 8, wobei die Absorptionsachse des Polarisators (12) so realisiert ist, dass der Winkel zwischen der Absorptionsachse des Polarisators (12) und einer Biegeachse der Berührungsbildschirmtafel im Bereich von etwa 45 bis etwa 90 Grad liegt.

10. Die flexible Berührungsbildschirmtafel nach Anspruch 8 oder 9, wobei der Polymerfilm aus einem Harzmaterial auf PVA-Basis hergestellt ist.

11. Die flexible Berührungsbildschirmtafel nach einem der vorhergehenden Ansprüche, wobei die Erfassungsmuster (220) aufweisen:
erste Erfassungsmuster (220a), die konfiguriert sind, um entlang einer ersten Richtung verbunden zu sein;
erste Verbindungsleitungen (220a1), die konfiguriert sind, um die benachbarten ersten Erfassungszellen (220a) miteinander zu verbinden;
zweite Erfassungsmuster (220b), die konfiguriert sind, um entlang einer zweiten Richtung verbunden zu sein; und
zweite Verbindungsleitungen (220b1), die konfiguriert sind, um die benachbarten zweiten Erfassungszellen (220b) miteinander zu verbinden.

12. Die flexible Berührungsbildschirmtafel nach Anspruch 11, wobei eine Isolierschicht an Schnittabschnitten der ersten Verbindungsleitungen (220a1) und der zweiten Verbindungsleitungen (220b1) eingefügt sind.

13. Eine flexible Anzeigevorrichtung (20), aufweisend eine flexible Berührungsbildschirmtafel nach einem der vorhergehenden Ansprüche,
wobei die Erfassungsmuster (220) und die Erfassungsleitungen (230) zwischen der flexiblen Anzeigevorrichtung (20) und der ersten Oberfläche des Fenstersubstrats (10) positioniert sind.

14. Die flexible Berührungsbildschirmtafel nach Anspruch 13, wobei die flexible Anzeigevorrichtung als organische lichtemittierende Anzeigevorrichtung implementiert ist.

15. Ein Verfahren zur Ausbildung einer flexiblen Berührungsbildschirmtafel, aufweisend ein Fenstersubstrat (10), das konfiguriert ist, um Flexibilität aufzuweisen; eine funktionelle Polarisationsschicht (30), die auf einer ersten Oberfläche des Fenstersubstrats (10) befestigt ist; Erfassungsmuster (220); Erfassungsleitungen (230), die mit den Erfassungsmustern (220) verbunden sind, wobei die funktionelle Polarisationsschicht (30) flexibel ist und in einen aktiven Bereich, auf dem ein Bild angezeigt wird, und einen nicht-aktiven Bereich, der auf der Außenseite des aktiven Bereichs positioniert ist, unterteilt ist, wobei die Erfassungsmuster (220) im aktiven Bereich auf einer ersten Oberfläche der funktionellen Polarisationsschicht (30) gegenüber der Oberfläche der funktionellen Polarisationsschicht (30), die am Fenstersubstrat (10) befestigt ist, ausgebildet sind; wobei die Erfassungsleitungen (230) im nicht-aktiven Bereich auf der ersten Oberfläche der funktionellen Polarisationsschicht (30) ausgebildet sind, und wobei die funktionelle Polarisationsschicht (30) eine laminierte Struktur aus einem Polarisator (12) und einem Verzögerungskompensationsfilm (16) aufweist, wobei eine Oberfläche des Polarisators (12) unmittelbar auf der ersten Oberfläche des Fenstersubstrats (10) befestigt ist, wobei eine Oberfläche des Verzögerungskompensationsfilms (16) auf der anderen Oberfläche des Polarisators (12), die nicht an der ersten Oberfläche des Fenstersubstrats (10) befestigt ist, befestigt ist, und wobei die Erfassungsmuster (220) auf der anderen Oberfläche des Verzögerungskompensationsfilms, die nicht am Polarisator (12) befestigt ist, ausgebildet sind, wobei das Verfahren die folgenden Schritte aufweist:
Ausbilden der funktionellen Polarisationsschicht (30) durch Laminieren des Polarisators (12) und des Verzögerungskompensationsfilms (16) mittels eines Rolle-zu-Rolle-Laminations- oder eines Folienlaminationsverfahrens.

## Revendications

1. Panneau d'écran tactile flexible, comprenant :
un substrat de fenêtre (10) configuré pour présenter une flexibilité ;
une couche fonctionnelle polarisante (30) attachée sur une première surface du substrat de fenêtre flexible (10) ;
des motifs de détection (220) ; et
des lignes de détection (230) qui sont connectées aux motifs de détection (220),
**caractérisé en ce que**
la couche fonctionnelle polarisante (30) est flexible et est divisée en une zone active sur laquelle une image est affichée et une zone non active positionnée à l'extérieur de la zone active,
les motifs de détection (220) sont formés dans la zone active sur une première surface de la couche fonctionnelle polarisante (30) opposée à la surface de la couche fonctionnelle polarisante (30) qui est attachée au substrat de fenêtre (10) ;
les lignes de détection (230) sont formées dans la zone non active sur la première surface de la couche fonctionnelle polarisante (30), et la couche fonctionnelle polarisante (30) a une structure stratifiée d'un polariseur (12) et d'un film de compensation de retard (16), dans lequel une surface du polariseur (12) est attachée directement sur la première surface du substrat de fenêtre (10), une surface du film de compensation de retard (16) est attachée sur l'autre surface du polariseur (12) qui n'est pas attachée à la première surface du substrat de fenêtre (10), et les motifs de détection (220) sont formés sur l'autre surface du film de compensation de retard qui n'est pas attachée au polariseur (12).

2. Panneau d'écran tactile flexible selon la revendication 1, dans lequel le polariseur (12) est attaché sur la première surface du substrat de fenêtre (10) par l'intermédiaire d'une première couche adhésive transparente (14), et le film de compensation de retard (16) est attaché sur une première surface du polariseur (12) par l'intermédiaire d'une deuxième couche adhésive transparente (14) .

3. Panneau d'écran tactile flexible selon la revendication 1, dans lequel une surface du polariseur (12) est attachée sur la première surface du substrat de fenêtre (10) par l'intermédiaire d'une première couche adhésive transparente (14), et le film de compensation de retard (16) est attaché sur l'autre surface du polariseur (12) par l'intermédiaire d'une deuxième couche adhésive transparente (14) .

4. Panneau d'écran tactile flexible selon la revendication 2 ou 3, dans lequel la première et/ou la deuxième couche adhésive transparente (14) sont réalisées par un adhésif de type solvant ou un adhésif de type film.

5. Panneau d'écran tactile flexible selon la revendication 4, dans lequel l'adhésif de type solvant est réalisé en utilisant au moins l'un d'un adhésif à alcool polyvinylique aqueux, d'un adhésif à base de polyester et d'un adhésif à base de polyuréthane.

6. Panneau d'écran tactile flexible selon la revendication 4, dans lequel l'adhésif de type film est réalisé en utilisant l'un d'un adhésif à base de polyacryle et d'un adhésif à base de silicium polycristallin.

7. Panneau d'écran tactile flexible selon l'une des revendications précédentes, dans lequel le substrat de fenêtre (10) est constitué d'au moins l'un du polyméthacrylate de méthyle, d'un acrylate et d'un polyester.

8. Panneau d'écran tactile flexible selon l'une des revendications précédentes, dans lequel le polariseur (12) est mis en oeuvre en étirant un film de polymère, et a un axe d'absorption dans la direction d'étirement.

9. Panneau d'écran tactile flexible selon la revendication 8, dans lequel l'axe d'absorption du polariseur (12) est mis en oeuvre de sorte que l'angle entre l'axe d'absorption du polariseur (12) et un axe de pliage du panneau d'écran tactile soit dans la plage d'environ 45 à environ 90 degrés.

10. Panneau d'écran tactile flexible selon la revendication 8 ou 9, dans lequel le film de polymère est constitué d'un matériau résineux à base de PVA.

11. Panneau d'écran tactile flexible selon l'une des revendications précédentes, dans lequel les motifs de détection (220) comprennent :
des premiers motifs de détection (220a) configurés pour être connectés le long d'une première direction ;
des premières lignes de connexion (220a1) configurées pour connecter les premières cellules de détection (220a) adjacentes les unes aux autres ;
des deuxièmes motifs de détection (220b) configurés pour être connectés le long d'une deuxième direction ; et
des deuxièmes lignes de connexion (220b1) configurées pour connecter les deuxièmes cellules de détection (220b) adjacentes les unes aux autres.

12. Panneau d'écran tactile flexible selon la revendication 11, dans lequel une couche isolante est interposée au niveau des parties d'intersection des premières lignes de liaison (220a1) et des deuxièmes lignes de liaison (220b1).

13. Dispositif d'affichage flexible (20) comprenant un panneau d'écran tactile flexible selon l'une des revendications précédentes,
dans lequel les motifs de détection (220) et les lignes de détection (230) sont positionnés entre le dispositif d'affichage flexible (20) et la première surface du substrat de fenêtre (10).

14. Dispositif d'affichage flexible selon la revendication 13, dans lequel le dispositif d'affichage flexible est mis en oeuvre en tant que dispositif d'affichage électroluminescent organique.

15. Procédé pour former un panneau d'écran tactile flexible comprenant un substrat de fenêtre (10) configuré pour présenter une flexibilité ; une couche fonctionnelle polarisante (30) attachée sur une première surface du substrat de fenêtre (10) ; des motifs de détection (220) ; des lignes de détection (230) qui sont connectées aux motifs de détection (220), dans lequel la couche fonctionnelle polarisante (30) est flexible et est divisée en une zone active sur laquelle une image est affichée et une zone non active positionnée à l'extérieur de la zone active, les motifs de détection (220) sont formés dans la zone active sur une première surface de la couche fonctionnelle polarisante (30) opposée à la surface de la couche fonctionnelle polarisante (30) qui est attachée au substrat de fenêtre (10) ; les lignes de détection (230) sont formées dans la zone non active sur la première surface de la couche fonctionnelle polarisante (30), et la couche fonctionnelle polarisante (30) a une structure stratifiée d'un polariseur (12) et d'un film de compensation de retard (16), dans lequel une surface du polariseur (12) est attachée directement sur la première surface du substrat de fenêtre (10), une surface du film de compensation de retard (16) est attachée sur l'autre surface du polariseur (12) qui n'est pas attachée à la première surface du substrat de fenêtre (10), et les motifs de détection (220) sont formés sur l'autre surface du film de compensation de retard qui n'est pas attachée au polariseur (12), le procédé comprenant l'étape :
de formation de la couche fonctionnelle polarisante (30) en lamifiant le polariseur (12) et le film de compensation de retard (16) en utilisant une lamification de rouleau à rouleau ou un procédé de lamification de feuilles.
